# EUROPÄISCHE PATENTSCHRIFT

(11) **EP 0 656 846 B1**
(45) Veröffentlichungstag und Bekanntmachung des Hinweises auf die Patenterteilung: **10.12.1997**
(21) Anmeldenummer: 93919182.1
(22) Anmeldetag: 26.08.1993
(51) Int. Cl.: B60S 1/34, B60S 1/24, F16C 9/00, B29C 45/14, B29C 65/00, B29C 65/42

(54) **VERFAHREN ZUM FIXIEREN EINER WELLE IN DEREN LAGERGEHÄUSE BEI WISCHERANLAGEN, SOWIE WISCHERANLAGE, INSBESONDERE ZUR SCHEIBENREINIGUNG EINES KRAFTFAHRZEUGS**
PROCESS FOR SECURING A WINDSHIELD WIPER SHAFT IN ITS BEARING HOUSING, AND WINDSHIELD WIPER, IN PARTICULAR FOR CLEANING MOTOR VEHICLE WINDSHIELDS
PROCEDE DE FIXATION D'UN ARBRE D'ESSUIE-GLACE DANS SON LOGEMENT DE PALIER, AINSI QU'ESSUIE-GLACE, NOTAMMENT POUR LE NETTOYAGE DE VITRES DE VEHICULES A MOTEUR

(30) Priorität: 04.09.1992 DE 4229495
(43) Veröffentlichungstag der Anmeldung: 14.06.1995
(73) Patentinhaber: ITT Automotive Europe GmbH, 60488 Frankfurt am Main (DE)
(72) Erfinder: EDELE, Reinhard, D-71432 Bietigheim-Bissingen (DE); KRIZEK, Oldrich, D-74321 Bietigheim-Bissingen (DE)
(86) Internationale Anmeldenummer: EP9302300
(87) Internationale Veröffentlichungsnummer: WO9405533

(56) Entgegenhaltungen:
- DE-A- 2 010 922
- DE-A- 3 637 462
- GB-A- 2 088 707
- GB-A- 2 248 669

## Beschreibung

Die Erfindung betrifft ein Verfahren zum Fixieren einer Welle in deren Lagergehäuse bei wischeranlagen, insbesondere zur Scheibenreinigung eines Kraftfahrzeugs, wobei zwischen der Welle und dem Lagergehäuse ein Ringspalt vorgesehen ist. Die Erfindung betrifft außerdem eine Wischeranlage, insbesondere zur Scheibenreinigung eines Kraftfahrzeugs, mit einer Antriebsvorrichtung und einem mit der Antriebsvorrichtung gekoppelten Gelenkgetriebe, wobei die Antriebsvorrichtung und/oder das Gelenkgetriebe jeweils wenigstens eine in einem Gehäuse gelagerte, rotierende oder pendelnde Welle aufweist, und zwischen der Welle und dessen Gehäuse ein Ringspalt vorhanden ist.

Mit der DE 40 28 892 A1 ist eine Antriebsvorrichtung, insbesondere für Scheibenwischer an Kraftfahrzeugen bekannt geworden, die eine aus einer Stirnseite eines Lagergehäuses herausragende Welle aufweist, wobei ein zylindrisches Gleitlager an das Lagergehäuse mit geringem Abstand zu dessen Stirnseite eingesetzt ist. Durch das Gleitlager ist zwischen dem Lagergehäuse und der Welle ein Ringspalt begrenzt. Zur Abdichtung des Ringspaltes gegenüber der Umgebung ist eine am Lagergehäuse festsitzende, aus elastischem Kunststoff gefertigte Buchse vorgesehen, die den Ringspalt vor dem Gleitlager verschließt und an ihrer dem Lagergehäuse abgewandten Ende einen radial nach innen vorspringenden Dichtflansch aufweist, welcher in eine Ringnut der Welle eingreift. Eine derartige Wellenlagerung weist zwar den Vorteil auf, daß sie außerordentlich robust ist. Jedoch ist der Aufbau und der Zusammenbau der Wellenlagerung aufwendig, und in der Regel müssen für eine optimale Lagerung und Abdichtung mehrere Bauteile verwendet werden.

Aus der DE-A-20 10 922 ist ein Wischlager für einen Kraftfahrzeugscheibenwischer bekannt, bei dem ein doppelt abgewinkelter Metallträger mit Kunststoff umspritzt ist, wobei die Kunststoffumspritzung im Mittelteil des Metallträgers als Lagerteil ausgebildet ist, das an seinen axialen Enden durch zwei radial abstehende Anschläge begrenzt ist. Ein aus zwei längsgeteilten Halbschalen bestehendes Lagergehäuse ist auf dem Lagerteil zwischen den beiden Anschlägen und an der Fahrzeugkarosserie festgelegt.

Ein solches Wischlager erfordert einen großen Aufwand, insbesondere im Hinblick auf eine exakte Maßhaltigkeit der relativ zueinander bewegten Teile. Schon geringfügige Überschreitungen von Durchmessertoleranzen am Lagerteil oder am Lagergehäuse würden das Wischlager in seiner Funktion beeinträchtigen oder unbrauchbar machen.

Der Erfindung liegt daher die Aufgabe zugrunde, ein Verfahren sowie eine Wischeranlage der eingangs genannten Art bereitzustellen, bei denen die Welle auf einfache Art und Weise im Lagergehäuse gelagert werden kann.

Diese Aufgabe wird bei dem eingangs genannten Verfahren erfindungsgemäß dadurch gelöst, daß nach dem Einsetzen und Ausrichten der Welle in deren Lagergehäuse der Ringspalt wenigstens abschnittsweise mit plastifiziertem Kunststoffmaterial oder Metall ausgespritzt wird.

Nachfolgend wird die Erfindung anhand einiger Ausführungsbeispiele beschrieben, wobei der Ringspalt mit Kunststoffmaterial ausgespritzt ist. Er kann aber auch mit einer Kupfer-, Blei- und/oder Zinnlegierung ausgespritzt sein. Beim erfindungsgemäßen Verfahren werden also zwischen die Welle und das Lagergehäuse weder Dichtung noch Gleit- oder Wälzlager eingesetzt, sondern lediglich der Ringraum mit Kunststoffmaterial ausgespritzt. Nachdem das Kunststoffmaterial erhärtet ist, dient dieses sowohl als Lagerung für die Welle als auch als Dichtung gegen ein Eindringen von Schmutz und Feuchtigkeit aus der Umgebung in die Lagerstelle bzw. gegen ein Austreten von Schmiermittel aus der Lagerstelle. Hierdurch wird der Vorteil erzielt, daß außer dem Kunststoffmaterial keine weiteren zusätzlichen Bauteile in den Ringspalt zur Lagerung und Abdichtung der Welle eingesetzt werden müssen. Ferner ist die Herstellung einer derartigen Wellenfixierung schnell und einfach auszuführen. Zwar wird die Welle nach dem Einsetzen in das Lagergehäuse in der Regel Ausgerichtet, d.h. zentriert, jedoch ist dieser Vorgang nicht unbedingt erforderlich Durch das Eingespritzte Kunststoffmaterial kann die Welle auch in versetzter bzw. gekippter Position im Lagergehäuse fixiert werden. Ferner hat das Einspritzen von Kunststoffmaterial in den Ringspalt den Vorteil, daß die Innenform des Lagergehäuses auch konisch ausgestaltet sein kann, was insbesondere für gegossene Gehäuse von Vorteil ist. Ferner muß die Innenform nach der Herstellung des Lagergehäuses nicht nachbearbeitet, insbesondere auf ein vorbestimmtes Maß aufgeweitet werden. Insbesondere bei aus Aluminium-Druckguß hergestellten Lagergehäusen sind trotz erheblichen Abmessungstoleranzen, die durch das Erkalten des Lagergehäuses bedingt sind, keine mechanischen Nachbearbeitungen erforderlich.

Um ein definiertes Spiel zwischen der Welle und dem ausgehärteten Kunststoffmaterial zu erhalten, wird die Welle vor dem Ausspritzen des Ringspalts insbesondere auf eine Temperatur von 200°C, +/- 30°C erwärmt. Da das Kunststoffmaterial nach dem Ausspritzen schneller erhärtet als die Welle abkühlt, wird durch das Schrumpfmaß der Welle ein definiertes Spiel erzeugt, durch welches eine leichtgängige Drehbarkeit der Welle gewährleistet ist.

Vorteilhaft wird das Kunststoffmaterial axial und/oder radial in den Ringspalt eingespritzt. Abhängig von der Form und Zugänglichkeit des Ringspaltes sowie von dessen Länge und der Temperatur der den Ringspalt begrenzenden Materialien, sowie vom verwendeten Kunststoffmaterial wird dieses entweder radial in den Ringspalt eingespritzt, wobei es nach beiden Seiten gepreßt wird, oder es erfolgt eine axiale Einspritzung, die insbesondere dann von Vorteil ist, wenn das Lagergehäuse von außen nicht oder nur schwer zugänglich ist.

Bei einer Weiterbildung ist vorgesehen, daß verschiedene Kunststoffmaterialien gleichzeitig oder nacheinander in den Ringspalt eingespritzt werden. Dabei können z.B. für niedrigen Reibwert, für eine gute Abdichtung, für eine hohe Widerstandsfähigkeit gegen bestimmte Stoffe, z.B. Fette, Öle, Wasser oder agressive Medien geeignete Materialien verwendet werden. Diese können dann über entsprechende Angußöffnungen nacheinander oder gleichzeitig in den Ringspalt eingespritzt werden. Auf diese Weise können die Eigenschaften der unterschiedlichen Kunststoffmaterialien kombiniert werden.

Um ein Austreten des in den Ringspalt eingespritzten Kunststoffamterials aus diesem zu verhindern, wird der Ringspalt während des Einspritzvorgangs axial z.B. mittels eines Werkzeugs verschlossen. Über dieses Werkzeug kann vorteilhaft die aus dem Ringspalt austretende Materialfront so umgelenkt werden, daß dieses wenigstens teilweise um das axiale Ende des Lagergehäuses herumgespritzt wird. Hierdurch wird eine Verankerung des Kunststoffmaterials am Lagergehäuse erzielt und ein axiales Verrutschen vermieden.

Eine Fixierung des Kunststoffmaterials in Umfangsrichtung am Lagergehäuse wird dadurch erzielt, daß das Kunststoffmaterial in an der Innenseite des Lagergehäuses vorgesehene Ausnehmungen eingespritzt wird. Diese Ausnehmungen können auch Hinterschneidungen aufweisen und sind insbesondere schwalbenschwanzförmig ausgeführt. Eine Fixierung der Welle in axialer Richtung wird dadurch erzielt, daß das Kunststoffmaterial in an der Umfangsfläche der Welle vorgesehene Ausnehmungen eingespritzt wird. Diese Ausnehmungen können als zylinderischer oder als kugelförmiger Einstich ausgeführt sein. Andere Formen sind möglich, solange sie in Umfangsrichtung rotationssymmetrisch sind.

Die oben genannte Aufgabe wird bei einer Wischeranlage der eingangs genannten Art erfindungsgemäß dadurch gelöst, daß der Ringspalt zwischen der Welle und dessen Gehäuse wenigstens abschnittsweise mit einem Kunststoffmaterial oder Metall ausgespritzt ist.

Hierdurch werden die o.g. Vorteile erzielt. Nachfolgend wird auf die Kunststoffausspritzung Bezug genommen, wobei die Metallausspritzung gleichermaßen vorteilhaft einsetzbar ist.

Die Reibung zwischen der Welle und dem Kunststoffmaterial kann vorteilhaft dadurch verringert werden, daß das Kunststoffmaterial mit einem Gleitmittelzusatz versehen ist. Dies können metallische Zusätze oder Zusätze in flüssiger Form sein.

Bevorzugt ist das Kunststoffmaterial ein Thermoplast oder ein Duroplast. Bei der Verwendung eines thermoplastischen Kunststoffes wird dieser durch Erwärmung plastifiziert und in den Ringspalt eingespritzt. Die Wischerwelle wird gegenüber dem Lagergehäuse durch Hilfswerkzeuge so lange fixiert, bis der eingespritzte thermoplastische Kunststoff abgekühlt und ausgehärtet ist. Bei der Verwendung eines Duroplasts wird dieser z.B. durch Zusatz eines Härters aktiviert und in plastischem Zustand in den Ringspalt eingespritzt. Insbesondere durch Zufuhr von Wärme wird der Duroplast ausgehärtet und fixiert die Welle. Die Zufuhr von Wärme an den Duroplast kann z.B. durch eine angewärmte Welle erfolgen.

Vorteilhaft bildet das eingespritzte Kunststoffmaterial in ausgehärtetem Zustand eine Lagerung und eine Abdichtung für die Welle. Es bedarf, wie bereits erwähnt, keiner weiteren Bauteile für die Lagerungs- und Dichtfunktionen.

Bevorzugt ist die Welle und/oder die Innenfläche des Lagergehäuses mit Absätzen, Ausnehmungen, Schultern oder dgl. versehen, die vom Kunststoffmaterial ausgespritzt sind. Diese Formänderungen der Welle bzw. der Innenfläche des Lagergehäuses bieten für das Kunststoffmaterial Verankerungspunkte, so daß dieses einerseits fest mit dem Lagergehäuse verbunden ist, andererseits die Welle in axialer Richtung starr vom Kunststoffmaterial gehalten wird.

Eine axiale Verankerung des Kunststoffmaterials im Lagergehäuse wird ferner dadurch erzielt, daß das Kunststoffmaterial das Lagergehäuse axial und insbesondere radial überragt. Ferner kann das Kunststoffmaterial in dem das Lagergehäuse axial überragenden Bereich über ein geeignetes Werkzeug auf die Wellenoberfläche während des Aushärtvorganges aufgepreßt werden. Hierdurch wird eine besonders gute Abdichtung erzielt. Dabei läuft das Kunststoffmaterial auf der Welle an seinen axialen Enden konusförmig zu.

Eine weitere Optimierung der Abdichtung kann dadurch erzielt werden, daß im Kunststoffmaterial zusätzlich Dichtungen, wie O-Ringe oder dgl. integriert sind. In diesem Fall kann für das Kunststoffmaterial z.B. ein Material für ein optimales Gleitreibungsverhältnis verwendet werden, wobei eine optimale Abdichtung z.B. durch den O-Ring erzielt wird, der in das Kunststoffmaterial eingespritzt, d.h. integriert ist. Auf diese Weise können die Eigenschaften des O-Rings und die Eigenschaften des Kunststoffmaterials kombiniert werden.

Eine weitere Abdichtung sowie eine bessere Verankerung des Kunststoffmaterials wird dadurch erzielt, daß das Lagergehäuse an seinen axialen Enden eine umlaufende Axialnut aufweist. In diese umlaufende Axialnut kann das Kunststoffmaterial eingespritzt oder das axial austretende Kunststoffmaterial eingepreßt werden, so lange dieses noch plastisch verformbar ist.

Bei Ausführungsformen ist vorgesehen, daß die Welle eine Abtriebswelle eines Wischermotors ist. Bei einer anderen Ausführungsform ist die Welle die eines Wischlagers. Bei diesen Ausführungsformen ist das Lagergehäuse das Gehäuse des Wischermotors bzw. dessen Getriebes und beim Wischlager wird das Lagergehäuse von der die Welle aufnehmenden Lagerbuchse gebildet.

Weitere Vorteile, Merkmal und Einzelheiten der Erfindung ergeben sich aus den Unteransprüchen sowie aus der nachfolgenden Beschreibung, in der unter Bezugnahme auf die Zeichnung zwei besonders bevorzugte Ausführungsbeispiele im einzelnen beschrieben sind. Dabei zeigen:
- Figur 1: eine Seitenansicht eines Wischmotors mit in Längsrichtung aufgeschnittenem Getriebe;
- Figur 2: eine Seitenansicht eines Wischlagers mit in Längsrichtung aufgeschnittener Lagerbuchse;
- Figuren 3a und 3b: einen Schnitt III-III gemäß Figur 2;
- Figur 4a-c: Ausführungsformen der axialen Stirnfläche der Lagerbuchse; und
- Figur 5: eine weitere Ausführungsform eines Einstichs der Wischerwelle.

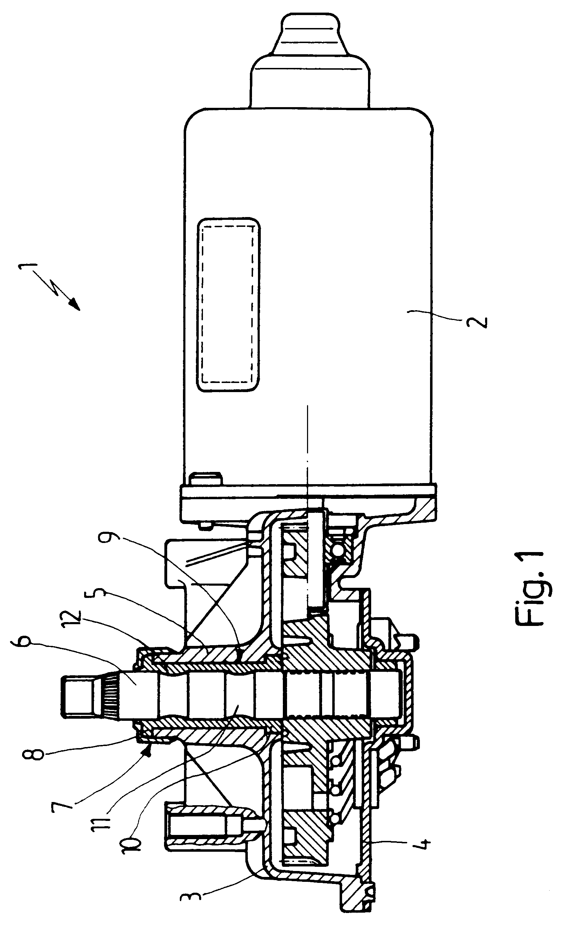

In der Figur 1 ist eine insgesamt mit 1 bezeichnete Antriebsvorrichtung wiedergegeben, die ein Motorengehäuse 2 aufweist, in dem sich im wesentlichen die stationären und rotierenden elektrischen Teile eines Elektromotors (nicht gezeigt) befinden. An das Motorengehäuse 2 ist ein topfförmiges Getriebegehäuse 3 angeflanscht, das von einem Deckel 4 verschlossen wird. An der dem Deckel 4 gegenüberliegenden Seite des Getriebegehäuses 3 ist dieses als Lagergehäuse 5 ausgebildet, in dem eine Wischerwelle 6 drehbar gelagert ist. Die Wischerwelle 6, welche aus einer dem Getriebegehäuse 3 abgewandten Stirnseite 7 des Lagergehäuses 5 herausragt, wird von dem Elektromotor über in dem Getriebegehäuse 3 untergerbachte Getriebeglieder rundlaufend oder pendelnd angetrieben.

Zur Lagerung der Wischerwelle 6 im Lagergehäuse 5 ist in einen Ringspalt 9 zwischen der Wischerwelle 6 und dem Lagergehäuse 5 ein Kunststoffmaterial 8 eingespritzt. Dieses Kunststoffmaterial 8 füllt den Ringspalt 9 über die ganze Länge des Lagergehäuses 5 aus und dringt in Ausnehmungen 10 des Lagergehäuses 5 sowie in Ausnehmungen 11 und 12 der Wischerwelle 6 ein. Die Ausnehmung 10 ist als Radialnut in der Innenfläche des Lagergehäuses 5 und die Ausnehmungen 11 und 12 sind als kugelförmiger Einstich in der Wischerwelle 6 ausgeführt. Außerdem übergreift das Kunststoffmaterial 8 die Stirnseite 7 des Lagergehäuses 5 axial und radial und ist über eine gewisse Wegstrecke axial über die Außenseite des Lagergehäuses 5 gezogen. Hierdurch wird das Kunststoffmaterial 8 nach dem Erhärten am Lagergehäuse 5 fixiert und hält dadurch die Wischerwelle 6 in der momentanen Lage fest. Das Kunststoffmaterial 8 dient dabei gleichzeitig als Lagerung und als Dichtung gegen ein Eintreten von Schmutz bzw. ein Austreten von Schmiermittel aus dem Inneren des Getriebegehäuses 3.

Die Wischerwelle 6 muß gegenüber dem Lagergehäuse 5 lediglich insoweit ausgerichtet sein, daß sie die Innenseite des Lagergehäuses nicht berührt. Eine exakte koaxiale Ausrichtung wird zwar angestrebt, ist jedoch nicht erforderlich. Ferner wird durch das erhärtete Kunststoffmaterial 8 die Wischerwelle 6 in axialer Richtung fixiert, so daß auch hierfür keine weiteren Elemente erforderlich sind.

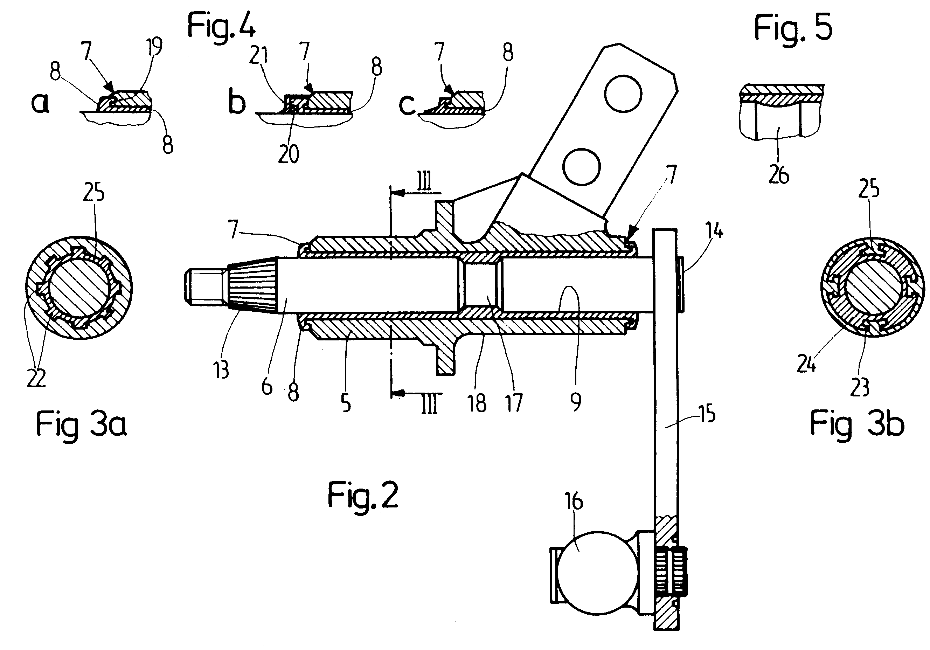

In der Figur 2 ist ein Wischlager wiedergegeben, bei dem im Lagergehäuse 5 die Wischerwelle 6 ebenfalls über das Kunststoffmaterial 8 fixiert ist. An dem einem Rändelkonus 13 gegenüberliegenden Ende 14 ist ein Lenker 15 mit aufgepreßtem Kugelbolzen 16 zur Krafteinleitung bzw. zur Einleitung der Schwenkbewegung angeordnet. Wie aus Figur 2 ersichtlich, ist das Kunststoffmaterial 8 axial und radial um die Stirnseiten 7 des Lagergehäuses 5 herumgezogen. Auf diese Weise wird das erhärtete Kunststoffmaterial 8 axial im Lagergehäuse 5 fixiert. Ferner weist die Wischerwelle 6 einen zylindrischen Einstich 17 auf, der der Ausnehmung 11 bzw. 12 der Wischerwelle 6 der Figur 1 entspricht. Über diesen Einstich 17 wird die Wischerwelle 6 ebenfalls in axialer Richtung im Kunststoffmaterial 8 und somit im Lagergehäuse 5 fixiert, wohingegen keine Fixierung in Umfangsrichtung stattfindet. Ferner ist erkennbar, daß das Lagergehäuse 5 einen Anguß 18 aufweist, durch den das plastifizierte Kunststoffmaterial 8 eingespritzt werden kann, so daß dieses sich im zylindrischen Einstich 17 radial und entlang des Ringspalts 9 axial bis zu den Stirnseiten 7 ausbreiten kann. An den Stirnseiten 7 angebrachte Werkzeuge verhindern ein Austreten des Kunststoffmaterials 8 aus dem Ringspalt 9 bzw. lenken dieses in radialer und in axialer Richtung um, so daß die Stirnseiten 7, wie in der Figur 2 dargestellt, umspritzt werden.

In der Figur 4a ist ein Ausschnitt der Stirnseite 7 dargestellt, in der eine ringförmige Axialnut 19 vorgesehen ist. In diese Axialnut 19 ist das Kunststoffmaterial 8 eingespritzt. Durch die Axialnut 19 wird das Kunststoffmaterial 8 an die Oberfläche der Wischerwelle 6 gedrängt. Hierdurch wird eine besonders gute Abdichtung erzielt. Die Figur 4b zeigt ein Ausführungsbeispiel, bei dem in dem die Stirnseite 7 axial übergreifenden Abschnitt des Kunststoffmaterials 8 ein O-Ring 20 integriert ist, der seinerseits auf der Oberfläche der Wischerwelle 6 aufliegt. Insgesamt ist der die Stirnseite 7 übergreifende Abschnitt des Kunststoffmaterials 8 zusammen mit dem O-Ring 20 von einer Ringschutzkappe 21 übergriffen. Über diese Ringschutzkappe 21 werden sowohl das Kunststoffmaterial 8 als auch der O-Ring 20 an die Oberfläche der Wischerwelle 6 gepreßt, wodurch eine optimale Abdichtung erzielt wird.

Bei dem in der Figur 4c wiedergegebenen Ausführungsform ist das Kunststoffmaterial 8 nach außen hin konisch zulaufend ausgeführt. Durch das Nachschwinden des Kunststoffmaterials 8 wird hierdurch eine weitere Möglichkeit einer optimalen Abdichtung z.B. gegen Wassereintritt geschaffen.

In den Figuren 3a und 3b sind zwei Ausführungsformen einer Ausgestaltung der Innenfläche des Lagergehäuses 5 wiedergegeben, wobei beide Figuren den Schnitt III-III gemäß Figur 2 darstellen. Beim Ausführungsbeispiel der Figur 3a ist die Innenfläche des Lagergehäuses 5 mit schwalbenschwanzförmigen Nuten 22 versehen, wohingegen beim Ausführungsbeispiel der Figur 3b die Innenfläche des Lagergehäuses 5 mit Hinterschneidungen 23 aufweisenden Nuten 24 versehen ist. Die Nuten 22 bzw. 24 verlaufen insbesondere über die ganze Länge des Lagergehäuses 5 in axialer Richtung. Durch die Nuten 22 und 24, in die das plastifizierte Kunststoffmaterial 8 eingespritzt wird, wird nach dem Aushärten des Kunststoffmaterials 8 dieses in Umfangsrichtung fixiert, so daß bei der Bewegung der Wischerwelle 6 im Lagergehäuse 5 ein Mitdrehen des Kunststoffmaterials 8 verhindert wird. Die die Nuten 22 bzw. 24 voneinander trennenden Stege 25 dienen nicht als Lager für die Wischerwelle 6, sondern lediglich zur Verankerung des Kunststoffmaterials 8 an der Innenoberfläche des Lagergehäuses 5.

In der Figur 2 ist die Wischerwelle 6 mit einem zylinderförmigen Einstich 17 versehen, wobei diese Ausführungsform lediglich beispielhaft wiedergegeben ist. In der Figur 5 ist ein kugelförmiger Einstich 26 dargestellt, der eine andere Ausführungsform repräsentiert.

## Patentansprüche

1. Verfahren zum Fixieren einer Welle (6) in deren Lagergehäuse (5) bei Wischeranlagen, insbesondere zur Scheibenreinigung eines Kraftfahrzeugs, wobei zwischen der Welle (6) und dem Lagergehäuse (5) ein Ringspalt (9) vorgesehen ist, **dadurch gekennzeichnet**, daß nach dem Einsetzen und ggf. nach dem Ausrichten der Welle (6) in deren Lagergehäuse (5) der Ringspalt (9) wenigstens abschnittsweise mit plastifiziertem Kunststoffmaterial (8) oder Metall ausgespritzt wird.

2. Verfahren nach Anspruch 1, dadurch gekennzeichnet, daß die Welle (6) vor dem Ausspritzen insbesondere auf eine Temperatur von 200°C +/- 30°C erwärmt wird.

3. Verfahren nach Anspruch 1 oder 2, dadurch gekennzeichent, daß das Kunststoffmaterial (8) bzw. das Metall axial und/oder radial in den Ringspalt (9) eingespritzt wird.

4. Verfahren nach einem der vorhergehenden Ansprüche, dadurch gekennzeichnet, daß verschiedene Kunststoffmaterialien (8) bzw. Metalle gleichzeitig oder nacheinander in den Ringspalt (9) eingespritzt werden.

5. Verfahren nach einem der vorhergehenden Ansprüche, dadurch gekennzeichnet, daß der Ringspalt (9) während des Einspritzvorganges axial z.B. mittels eines Werkzeugs verschlossen wird.

6. Verfahren nach einem der vorhergehenden Ansprüche, dadurch gekennzeichnet, daß das Kunststoffmaterial (8) bzw. das Metall wenigstens teilweise um das axiale Ende des Lagergehäuses (5) herumgespritzt wird.

7. Verfahren nach einem der vorhergehenden Ansprüche, dadurch gekennzeichent, daß das Kunststoffmaterial bzw. das Metall in an der Innenseite (5) und/oder an der Umfangsfläche der Welle (6) vorgesehene Ausnehmungen (10,11,12,22,24,26) eingespritzt wird.

8. Wischeranlage, hergestellt nach einem Verfahren der vorhergehenden Ansprüche und insbesondere zur Scheibenreinigung eines Kraftfahrzeugs, mit einer Antriebsvorrichtung (1) und einem mit der Antriebsvorrichtung (1) gekoppelten Gelenkgetriebe, wobei die Antriebsvorrichtung (1) und/oder das Gelenkgetriebe wenigstens eine in einem Gehäuse (5) gelagerte, rotierende oder pendelnde Welle (6) aufweist, und zwischen der Welle (6) und dessen Gehäuse (5) ein Ringspalt (9) vorhanden ist, dadurch gekennzeichnet, daß der Ringspalt (9) zwischen der Welle (6) und dessen Gehäuse (5) wenigstens abschnittsweise mit einem Kunststoffmaterial oder Metall (8) ausgespritzt ist.

9. Wischeranlage nach Anspruch 8, dadurch gekennzeichnet, daß das Kunststoffmaterial (8) bzw. das Metall mit einem Gleitmittelzusatz versehen ist.

10. Wischeranlage nach Anspruch 8 oder 9, dadurch gekennzeichnet, daß das Kunststoffmaterial (8) ein Thermoplast oder ein Duroplast ist.

11. Wischeranlage nach einem der Ansprüche 8 oder 9, dadurch gekennzeichnet, daß der Ringspalt (9) mit einer Kupfer-, Blei- und/oder Zinnlegierung ausgespritzt ist.

12. Wischeranlage nach einem der Ansprüche 8 bis 11, dadurch gekennzeichnet, daß das eingespritzte Kunststoffmaterial (8) bzw. Metall in ausgehärtetem Zustand eine Lagerung und eine Abdichtung für die Welle (6) bildet.

13. Wischeranlage nach einem der Ansprüche 8 bis 12, dadurch gekennzeichnet, daß die Welle (6) und/oder die Innenfläche des Lagergehäuses (5) mit Absätzen, Ausnehmungen (10,11,12,22,24,26), Schultern oder dgl. versehen ist, die vom Kunststoffmaterial (8) bzw. Metall ausgespritzt sind.

14. Wischeranlage nach einem der Ansprüche 8 bis 13, dadurch gekennzeichnet, daß das Kunststoffmaterial (8) bzw. das Metall das Lagerghäuse (5) axial und insbesondere radial überragt.

15. Wischeranlage nach einem der Ansprüche 8 bis 14, dadurch gekennzeichnet, daß das Kunststoffmaterial (8) bzw. das Metall auf der Welle (6) an seinen axialen Enden konusförmig zuläuft.

16. Wischeranlage nach einem der Ansprüche 8 bis 15, dadurch gekennzeichnet, daß im Kunststoffmaterial (8) bzw. Metall zusätzliche Dichtungen, wie O-Ringe (20) oder dgl. integriert sind.

17. Wischeranlage nach einem der Ansprüche 8 bis 16, dadurch gekennzeichnet, daß das Lagergehäuse (5) an seinen axialen Enden eine umlaufende Axialnut (19) aufweist.

18. Wischeranlage nach einem der Ansprüche 8 bis 17, dadurch gekennzeichnet, daß das Lagergehäuse (5) eine radiale Angußöffnung (18) aufweist.

19. Wischeranlage nach einem der Ansprüche 8 bis 18, dadurch gekennzeichnet, daß die Welle (6) eine Abtriebswelle eines Wischermotors, die Welle eines Wischlagers oder dgl. ist.

## Claims

1. A method of fixating a shaft (6) in its bearing casing 5) in wiper installations, in particular for cleaning the windscreen of an automotive vehicle, the shaft (6) including an annular gap (9) between the shaft (6) and the bearing casing (5),
**characterized** in that, after inserting and, if required, aligning the shaft (6) in its bearing casing (5), plastified plastic material (8) or metal is injected at least in sections of the annular gap (9).

2. A method as claimed in claim 1,
**characterized** in that the shaft (6) is heated before injection, in particular up to a temperature of 200°C ± 30°C.

3. A method as claimed in claim 1 or claim 2,
**characterized** in that the plastic material (8) or the metal, respectively, is injected axially and/or radially into the annular gap (9).

4. A method as claimed in any one of the preceding claims,
**characterized** in that different plastic materials (8) or metals are injected into the annular gap (9) simultaneously or in succession.

5. A method as claimed in any one of the preceding claims,
**characterized** in that, during injection, the annular gap (9) is closed axially, for example, by means of a tool.

6. A method as claimed in any one of the preceding claims,
**characterized** in that the plastic material (8) or the metal is at least partially injection-moulded around the axial end of the bearing casing (5).

7. A method as claimed in any one of the preceding claims,
**characterized** in that the plastic material or the metal is injected into recesses (10,11,12,22,24,26) provided on the inside (5) and/or the circumferential surface of the shaft (6).

8. A wiper installation, manufactured according to a method of the preceding claims and used, in particular, for cleaning the windscreen of an automotive vehicle, including a drive mechanism (1) and a linkage coupled to the drive mechanism (1), wherein the drive mechanism (1) and/or the linkage have at least one rotating or swinging shaft (6) supported in a casing (5), and including an annular gap (9) between the shaft (6) and its casing (5),
**characterized** in that plastic material or metal (8) is injected at least in sections of the annular gap (9) between the shaft (6) and its casing (5).

9. A wiper installation as claimed in claim 8,
**characterized** in that the plastic material (8) and the metal is provided with the addition of a lubricant.

10. A wiper installation as claimed in claim 8 or claim 9,
**characterized** in that the plastic material (8) is a thermoplastic material and a duroplastic material.

11. A wiper installation as claimed in claim 8 or claim 9,
**characterized** in that the annular gap (9) is filled by the injection of a copper, lead and/or tin alloy.

12. A wiper installation as claimed in any one of claims 8 to 11,
**characterized** in that in cured or permanently hardened condition, the injected plastic material (8) or metal forms a bearing and a seal for the shaft (6).

13. A wiper installation as claimed in any one of claims 8 to 12,
**characterized** in that the shaft (6) and/or the inside of the bearing casing (5) includes steps, recesses (10,11,12,22,24,26), shoulders, etc., which are filled by the injection of plastic material (8) or metal.

14. A wiper installation as claimed in any one of claims 8 to 13,
**characterized** in that the plastic material (8) and the metal rises axially and, in particular, radially above the bearing casing (5).

15. A wiper installation as claimed in any one of claims 8 to 14,
**characterized** in that the plastic material (8) and the metal on the shaft (6) tapers at its axial ends.

16. A wiper installation as claimed in any one of claims 8 to 15,
**characterized** in that additional seals, such as O-rings (20) or the like, are integrated in the plastic material (8) or in the metal.

17. A wiper installation as claimed in any one of claims 8 to 16,
**characterized** in that the bearing casing (5) on its axial ends has a circumferential axial groove (19).

18. A wiper installation as claimed in any one of claims 8 to 17,
**characterized** in that the bearing casing (5) has a radial feed opening (18).

19. A wiper installation as claimed in any one of claims 8 to 18,
**characterized** in that the shaft (6) is a driven shaft of a wiper motor, the shaft of a wiper bearing, or the like.

## Revendications

1. Procédé de maintien d'un arbre (6) dans son boîtier palier (5) dans le cadre de systèmes d'essuie-glaces, en particulier pour le nettoyage des vitres d'un véhicule automobile, où un interstice annulaire (9) existe entre le boitier palier (5) et l'arbre d'essuie-glace (6), caractérisé en ce qu'après l'introduction et, le cas échéant, après l'alignement de 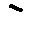 larbre (6) dans son boîtier palier (5), l'interstice annulaire (9) est rempli par injection, par secteurs au moins, d'une matière plastique ramollie (8) ou de métal.

2. Procédé selon la revendication 1,
caractérisé en ce qu'avant l'injection, 1'arbre (6) est porté à une température notamment de l'ordre de 200°C ± 30°C.

3. Procédé selon la revendication 1 ou 2,
caractérisé en ce que la matière plastique (8) ou le métal sont injectés axialement et/ou radialement dans l'inerstice annulaire (9).

4. Procédé selon l'une des revendications précédentes,
caractérisé en ce que différent(e)s matières plastiques (8) ou métaux sont injecté(e)s soit simultanément, soit successivement dans l'interstice annulaire (9).

5. Procédé selon l'une des revendications précédentes,
caractérisé en ce que, pendant l'opération d'injection, l'interstice annulaire (9) est obturé axialement par exemple au moyen d'un outil.

6. Procédé selon l'une de revendications précédentes,
caractérisé en ce que la matière plastique (8) ou le métal sont moulés au moins partiellement autour de l'extrémité axiale du boîtier palier (5).

7. Procédé selon l'une des revendications précédentes,
caractérisé en ce que la matière plastique ou le métal sont injectés dans des évidements (10, 11, 12, 22, 24, 26) prévus à la surface intérieure (5) et/ou à la surface circonférentielle de l'arbre (6).

8. Système d'essuie-glace, fabriqué selon un procédé correspondant à l'une des revendications précédentes, et notamment pour le nettoyage des vitres d'un véhicule automobile, comprenant un dispositif d'entraînement (1) comportant un mécanisme articulé, le dispositif d'entraînement (1) et/au le mécanisme articulé comportant au moins un arbre tournant ou oscillant (6) logé dans un boîtier (5), et un interstice annulaire (9) existant entre l'arbre (6) et son boîtier (5),
caratérisé en ce que l'interstice annulaire (9) entre l'arbre (6) et le boîtier (5) est rempli par injection, par secteurs au moins, d'une matière plastique (8) ou d'un métal.

9. Système d'essuie-glace selon la revendication 8,
caractérisé en ce qu la matière plastique (8) ou le métal sont chargés d'un additif lubrificant.

10. Système d'essuie-glace selon la revendication 8 ou 9,
caractérisé en ce que en ce que la matière plastique (8) est une matière thermoplastique ou une matière thermodurcissable.

11. Système d'essuie-glace selon l'une des revendications 8 à 9,
caractérisé en ce que l'interstice annulaire (9) est remple d'un alliage de cuivre, de plomb, et/ou d'étain.

12. Système d'essuie-glace selon l'une des revendications 8 à 11,
caractérisé en ce que la matière plastique (8) ou le métal injectés forment, à l'état durci, un palier de support et un joint d'étanchéité pour l'arbre (6).

13. Système d'essuie-glace selon l'une des revendications 8 à 12,
caractérisé en ce que l'arbre (6) et/ou la surface intérieure du boîtier palier (5) sont pourvus d'étages, d'évidements (10, 11, 12, 22, 24, 26), d'épaulements ou similaires, qui sont remplis par la matière plastique (8) ou le métal injectés.

14. Système d'essuie-glace selon l'une des revendications 8 à 13,
caractérisé en ce que la matière plastique (8) ou le métal dépassent à l'extérieur du boîtier palier (5) axialiement et notamment radialement.

15. Système d'essuie-glace selon l'une des revendications 8 à 14,
caractérisé en ce que les extrémités de la matière plastique (8) ou du métal se resserrent autour de l'arbre (6) en une forme de cône.

16. Système d'essuie-glace selon l'une des revendications 8 à 15,
caractérisé en ce que des joints d'étanchéité supplémentaires, tels que des joints toriques (20) ou similaires, sont intégrés dans la matière plastque (8) ou le métal.

17. Système d'essuie-glace selon l'une des revendications 8 à 16,
caractérisé en ce que le boîtier palier (5) comporte, à ses extrémités axiales, une rainure axiale circonférentielle (19).

18. Système d'essuie-glace selon l'une des revendications 8 à 17,
caratérisé en ce que la boitier palier (5) comporte un orifice d'injection radial (18).

19. Système d'essuie-glace selon l'une des revendications 8 à 18,
caractérisé en ce que l'arbre (6) est l'arbre de sortie d'un moteur d'essuie-glace, l'arbre d'un palier d'essuie-glace, ou similaire.
